# EUROPEAN PATENT APPLICATION

(11) **EP 3 480 011 A1**
(43) Date of publication of application: **08.05.2019**
(21) Application number: 17199648.1
(22) Date of filing: 02.11.2017
(51) Int. Cl.: B32B 18/00, C04B 41/45

(54) **METHOD TO CREATE A GOOD BONDING BETWEEN A FREE STANDING THERMAL BARRIER COATING AND A GREEN CMC**

(71) Applicant: Siemens Aktiengesellschaft, 80333 München (DE)
(72) Inventor: Hollingsworth, Peter Stuart, 10589 Berlin (DE); Reymann, Helge, 14167 Berlin (DE); Richter, Johannes, 10559 Berlin (DE); Van der Laag, Niels, 81369 München (DE)

(57) **Abstract**

By providing a free standing TBC (7) which is pressed onto a green CMC substrate (4) and sintering this composite structure the resulting sintered composite reveals a good bonding between the TBC and sintered CMC.

## Description

The invention relates to a coated CMC wherein a ceramic coating shall be present on a CMC (Ceramic Matrix Composite).

Even the CMC materials like a silicon-carbide/silicon-carbide-fibers or alumina matrix with oxide fibers need a thermal and/or corrosion protection by a ceramic coating, Thermal Barrier Coating (= TBC).

Ceramic Matrix Composites (CMC) are composed of several layers (plies). These plies consist of ceramic matrix material and ceramic fibers. The matrix stabilizes the fibers. The fibers are responsible for the toughness and strength of the composite material. Due to the limited heat resistance of the CMC materials (for Al₂O₃ about 1473K) a TBC needs to be applied on top of the CMCs for desired higher turbine inlet temperatures.

One important factor is a good bonding or adherence between the ceramic coating on the CMC substrate.

It is therefore aim of the invention to reveal a method wherein a good bonding between the TBC and the CMC substrate is provided.

The task is solved by a method according to claim 1.

The main challenge is to achieve a sufficient bonding between the TBC and the CMC surface. In particular the fibers cause a TBC spallation, due to their smooth surface. While manufacturing the CMC the plies are pressed together in a press mould. Afterwards the CMC is sintered in an oven. The resulting surface of the CMC is smooth. This makes a surface roughening process necessary to apply a well bonded TBC by means of Thermal Spraying (e.g. atmospheric plasma spraying APS). Furthermore, the conventional roughening prior to the TBC coating like a grit blasting process is not suitable for CMCs, since the impacting grit blasting particles destroy the ceramic fibers. This leads to an insufficient bonding between CMC and TBC.

This invention gives the opportunity to apply a TBC before sintering the CMC by using a free standing TBC.

The main idea of this invention is the following:
Step A: Producing a free standing TBC.

There are several ways known to produce a free standing TBC, like coating on a smooth surface where the TBC do not stick, coat on an anti-bonding liquid, dissolve the substrate by using an acid or removing the substrate mechanically.

To achieve the right geometry of the TBC, the TBC is applied into a smooth metallic cast which is a counterpart/negative shape to the shape of the final CMC. Afterwards the TBC is removed.

Step B: Create a bonding between CMC and TBC
- To create an initial bonding, the not sintered CMC (CMC in a green or bisque state) and the TBC are packed and pressed together in a press mould.

After the pressing process the CMC/TBC composite is sintered together in an oven.

The mechanical pressing in addition with the sintering process lead to a good mechanical and chemical bonding of the TBC to CMC. The bonding is supported by the natural roughness and peaks of the as-sprayed TBC surface. Such roughness peaks are able to get into (penetrate) the CMC surface and generate a further improved mechanical clamping. The not completely sintered CMC and the TBC are put together in the press mould. The press mould presses the CMC and TBC with a specific force.

In step B the CMC/TBC composite is heat treated/sintered together in an oven.
Figure 1 shows the schematic arrangement of a TBC 7 and a CMC substrate 4 for a CMC component 1.
Figure 2 shows a schematic arrangement of a green CMC substrate 4' which is in a green state and must be still sintered, wherein a free standing TBC 7' was already sintered and pressed especially by a tool onto or into the green CMC substrate 4'. Not explicitly shown in this schematic figure are the roughness and peaks of the surface of the free standing TBC 7' that are pressed into the green CMC substrate 4'. The roughness can also be adjusted.

The green CMC substrate 4' can also have a bonding layer for the TBC, especially ceramic, which is the also in a green or similar state.

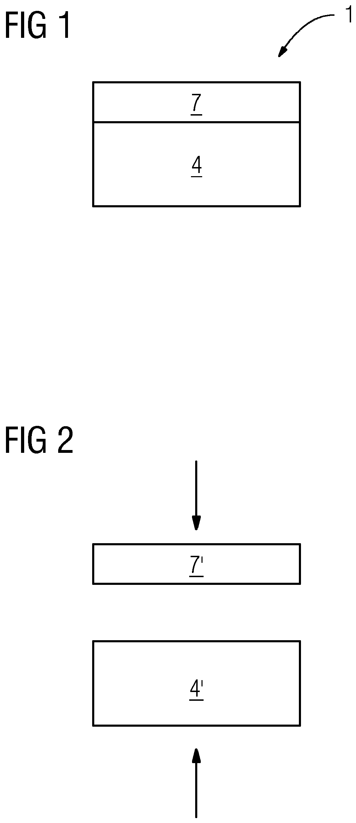

The pressure or compressing device is removed and a green CMC substrate 4' with the adhered TBC 7' is put to oven and sintered and get the final state, wherein CMC substrate 4' and TBC 7' are strongly joined together to form a final component 1 with a CMC substrate 4 and a TBC 7 (FIG 1).

The main advantage of this invention is the opportunity to strongly and reliably attach a TBC to a CMC surface fast without difficult process steps. This new manufacturing procedure gives the opportunity to avoid an aggressive mechanical roughening process of the CMC surface e.g. by using conventional grit blasting.

This new manufacturing chain of a CMC/TBC composite leads to a high bonding strength of the TBC to the CMC surface.

This invention enables to provide CMC based components, especially vanes providing the strong bonding required for the TBC layer to use them in highly stressed surroundings. This makes it possible to, for example, use much higher possible turbine inlet temperatures subsequently leading to higher turbine efficiencies.

## Claims

1. Method to produce
a component (1) with a CMC substrate (4) and a ceramic coating (7) onto the CMC substrate (4),
especially onto and into the CMC substrate (4),
wherein a free standing TBC (7') is produced or provided,
wherein the free standing TBC (7') is at least partially sintered,
especially fully sintered,
wherein a green CMC substrate (4') is produced or provided,
wherein in a next step the free standing TBC (7') is placed onto the green CMC substrate (4') and compressed together, especially by a compressing tool,
onto,
especially onto and into,
a ceramic matrix of the green CMC substrate (4'),
wherein after compressing and removing the pressure the green CMC substrate (4') with the adhered TBC (7') is sintered,
especially in an oven.

2. Method according to claim 1,
wherein an oxide matrix and oxide fibers are used for the CMC substrate (4, 4').

3. Method according to claim 1 or 2,
wherein the TBC (7, 7') is a zirconia based coating.
